# EUROPÄISCHE PATENTSCHRIFT

(11) **EP 1 504 190 B1**
(45) Veröffentlichungstag und Bekanntmachung des Hinweises auf die Patenterteilung: **27.09.2006**
(21) Anmeldenummer: 03752722.3
(22) Anmeldetag: 02.05.2003
(51) Int. Cl.: F03B 11/02, F01D 9/02

(54) **SPIRALE EINER STROE MUNGSMASCHINE**
SPIRAL PERTAINING TO A TURBO-MACHINE
SPIRALE D'UNE TURBOMACHINE

(30) Priorität: 16.05.2002 AT 7522002
(43) Veröffentlichungstag der Anmeldung: 09.02.2005
(73) Patentinhaber: VA TECH HYDRO GmbH & Co., 1141 Wien (AT)
(72) Erfinder: SUGG, Josef-Michael, 88367 Hohentengen-Ölkofen (DE)
(74) Vertreter: Schweinzer, Friedrich
(86) Internationale Anmeldenummer: PCT/EP2003/004619
(87) Internationale Veröffentlichungsnummer: WO 2003/098032

(56) Entgegenhaltungen:
- DE-B- 1 258 360
- US-A- 1 483 995
- US-A- 1 526 917
- US-A- 1 762 121

## Beschreibung

Die Erfindung betrifft eine Spirale einer Strömungsmaschine, die aus einer Anzahl von entlang einer Spiralenlängsachse angeordneten und an den Stimseiten miteinander verbundenen Segmenten und zumindest einer Parallelplatte besteht, wobei zumindest im Bereich des Überganges der Spirale zu der Parallelplatte ein Verstärkungsblech angeordnet ist, welches einen Teil des Mantels der Spirale bildet, sowie einer Anwendung einer solchen Spirale bei einem Wasserkraftwerk.

Die Spiralen von Strömungsmaschinen, wie Turbinen, Pumpturbinen oder Pumpen, werden in der Regel aus einzelnen miteinander verschweißten Segmenten gebildet. Dabei wird die Spirale spannungs- und strömungsmäßig umso günstiger, je mehr Segmente vorgesehen werden. Auf der anderen Seite verteuert sich eine Spirale je mehr Segmente vorgesehen werden. Aus diesem Grund werden Spiralen eher mit weniger Segmenten gefertigt, wobei die an den Übergängen der Spirale zur Parallelplatte auftretenden Spannungsspitzen durch entsprechende Blechdicken der Spiralhaut abgefangen werden. Strömungstechnische Nachteile werden dabei in Kauf genommen.

Die US 1,483,995 A zeigt eine Spirale mit Segmenten und einem Ring, der zwei Flansche aufweist, wobei ein Flansch Teil des Mantels der Spirale ist und der andere Flansch als Parallelplatte dient. Der erste Flansch verbindet dabei über die gesamte Länge der Spirale die Spiralsegmente mit dem zweiten Flansch. Die US 1,762,121 A zeigt eine ähnliche Spirale. Mit keiner dieser Spiralen werden jedoch die Strömungsverhältnisse innerhalb der Spirale beeinflusst.

Die DE 12 58 360 B offenbart eine Spirale aus Segmenten und einer Parallelplatte, wobei am Übergang zwischen den Segmenten zur Parallelplatte Verstärkungsbleche angeordnet sind, welche einen Teil des Spiralenmantels bilden. Die Verstärkungsbleche sind dabei entlang der gesamten Spirale angeordnet. Ein solche Spirale ist jedoch aufwendig in der Herstellung, da viele Schweißnähte gesetzt werden müssen und die Strömungsverhältnisse innerhalb der Spirale bleiben dadurch unverändert, da die Anzahl der Segment durch die Verstärkungsbleche nicht verändert wird.

Die gegenständliche Erfindung hat sich nun die Aufgabe gestellt, eine Spirale anzugeben, die es ermöglicht dünnere Bleche für die Spirale zu verwenden und gleichzeitig die Spirale strömungsmäßig verbessert.

Diese Aufgabe wird erfindungsgemäß dadurch gelöst, dass das Verstärkungsblech die Spirale mit der Parallelplatte in Richtung der Spiralenlängsachse nur abschnittsweise verbindet.
Durch das Verstärkungsblech im Bereich des Überganges wird die Spirale spannungsmäßig günstiger, die Spannungsspitzen reduzieren sich, womit für die Spirale selbst dünnere Bleche verwendet werden können. In der Praxis konnte somit eine Reduzierung des Gewichts einer Spirale von bis zu 10% erreicht werden, was sich auch in den Herstellungskosten entsprechend niederschlägt.
Die Verstärkungsbleche bewirken außerdem eine schwächere Umlenkung des flüssigen Mediums in der Spirale, wodurch sich die Strömungskontur in der Spirale verbessert.

Eine besonders spannungsreduzierende und strömungsverbessernde Ausgestaltung ergibt sich, wenn das Verstärkungsblech dreiecksförmig ausgeführt ist.

Die Verstärkungsbleche werden dabei vorteilhafter Weise derart eingesetzt, dass durch das Verstärkungsblech die innere Kontur der Spirale im Wesentlichen erhalten bleibt, womit die Strömungskontur der Spirale durch die sich ergebenden sanfteren Umlenkungen verbessert wird. Damit sinken die Strömungsverluste und der Wirkungsgrad verbessert sich.

Aus Effizienz- und Kostengründen werden die Verstärkungsbleche lediglich im Bereich der Spirale mit den größten Durchmessern angeordnet, da dort die größten Belastungen auftreten und die Verstärkungsbleche daher auch die größte Wirkung entfalten können.

Da die Belastungen um die Mittelebene im Wesentlich symmetrisch auftreten, werden günstiger Weise zumindest je ein Verstärkungsblech an beiden Seiten der Übergänge zu der Parallelplatte angeordnet.

Eine erfindungsgemäße Spirale kann einfach durch Verschweißen der Segmente und Einschweißen der Verstärkungsbleche in Ausnehmungen der Spirale bzw. Aufschweißen der Verstärkungsbleche gefertigt werden.

Aus Sicherheitsgründen werden die am höchsten belasteten Stellen der Spirale teilweise freigelassen um spätere Kontrollen dieser Stellen zuzulassen. Dies ist nun nicht mehr erforderlich, da das Spannungsniveau durch die Verstärkungsbleche abgesenkt wird, sondern die Außenfläche der Spirale können im Bereich der Verstärkungsbleche vollständig einbetoniert werden, was die konstruktive Gestaltung eines Wasserkraftwerkes erheblich vereinfachen kann.

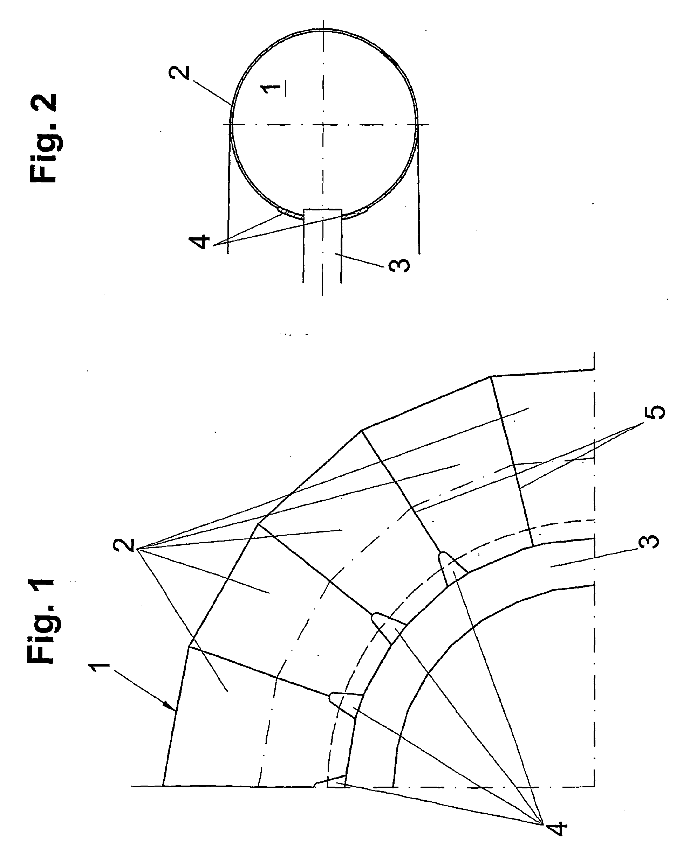

Die vorliegende Erfindung wird nun anhand der beispielhaften, schematischen und nicht einschränkenden Figuren 1 und 2 beschrieben. Dabei zeigt
- Fig. 1: einen Teil einer Spirale mit erfindungsgemäßen Verstärkungsblechen und
- Fig. 2: einen Querschnitt durch die Spirale mit einer Parallelplatte.

In Fig. 1 ist ein Ausschnitt einer Spirale 1 einer Strömungsmaschine, wie z.B. einer Francis-Turbine, einer Pumpturbine oder einer Pumpe, gezeigt, die aus fertigungstechnischen Gründen aus mehreren Segmenten 2 zusammengesetzt wird. Die Segmente 2 sind in diesem Ausführungsbeispiel entlang der Segmentfugen 5 miteinander verschweißt. Die Spirale 1 ist mit einer Parallelplatte 3 verschweißt an dem andere Bauteile der Strömungsmaschine, wie z.B. ein Turbinendeckel, der Leitradring, etc., angeflanscht werden können. Zwischen einer oberen und unteren Parallelplatte 3 könnten ebenfalls noch hier nicht dargestellte, hinlänglich bekannte Stützschaufeln oder andere geeignete Verbindungselemente, wie Abstandsstützen, etc., angeordnet sein.
Im Bereich der Spirale 1 mit dem größten Querschnittsdurchmessern, also dort wo die größten Belastungen auftreten sind nun im Verschneidungbereich der Segmentfugen 5 mit der Parallelplatte 3, also im Bereich in dem normalerweise die größten Spannungen und Belastungen auftreten, Verstärkungsbleche 4 angeordnet. Die Verstärkungsbleche 4 sind hier dreiecksförmig ausgeführt und sind in Ausnehmungen im Mantel der Spirale 1 eingeschweißt, sodass die Grundseite des Dreiecks mit der Parallelplatte 3 verbunden ist und die beiden Schenkel des Dreiecks an der Segmentfuge 5 zu einer abgerundeten Spitze zusammenlaufen.
Die Form des Verstärkungsbleches ist selbstverständlich nicht auf ein Dreieck beschränkt, sondern es sind auch beliebige andere Formen, wie beispielsweise ein ellipsenförmiges oder ovales Verstärkungsblech, denkbar.

Wie der Fig. 2 entnommen werden kann, bleibt die kreisförmige Innenkontur der Spirale im Wesentlichen erhalten. Selbstverständlich könnte aus strömungstechnischen oder spannungsbedingten Gründen die Innenkontur durch die Verstärkungsbleche 4 verändert werden, z.B. könnte der Radius des Verstärkungsbleches 4 etwas größer gewählt werden, wie der innere Spiralradius.
Das Verstärkungsblech 4 ist hier dicker wie der Rest der Spirale 1, oder besser ausgedrückt kann die Blechstärke der Spirale 1 durch die spannungsreduzierende Wirkung der Verstärkungsbleche 4 dünner wie bisher gewählt werden, wodurch sich eine erhebliche Gewichtseinsparung der Spirale 1 ergibt.
In diesem Ausführungsbeispiel ist zu beiden Seiten der Parallelplatte 3 ein Verstärkungsblech 4 eingesetzt.

Wie der Fig. 1 entnommen werden kann wird aus Sicht der Parallelplatte 3 durch die Verstärkungsbleche 4 die Anzahl der Segmente verdoppelt, da im Bereich der Parallelplatte 3 das Verstärkungsblech 4 eigentlich als Segment fungiert. Dadurch wird der Öffnungswinkel der einzelnen Segmente verkleinert, was wiederum zu kleineren Spannungsspitzen führt. Darüber hinaus wirken sich die Verstärkungsbleche 4 auch strömungsmäßig vorteilhaft aus, da durch die verringerte Umlenkung des Mediums die Gefahr des Ablösen des Mediums von der Spiralhaut verringert wird, die Strömungskontur somit verbessert wird.

In den obigen Ausführungen wird nur von eingesetzten Verstärkungsblechen gesprochen, es ist aber selbstverständlich ebenfalls denkbar, Verstärkungsbleche an den entsprechenden Stellen, vorzugsweise außen, auf den Mantel des Spirale aufzuschweißen, was im Wesentlichen die gleiche Wirkung entfalten würde.

Aufgrund der spannungsreduzierenden Wirkung der Verstärkungsbleche ist es nunmehr nicht mehr erforderlich, diese Stellen der höchsten Belastungen beim Einbetonieren der Spirale freizulassen, um spätere Kontrollen zu ermöglichen, sondern es kann bei Bedarf die gesamte Spirale einbetoniert werden, was den Bau eines Wasserkraftwerkes natürlich vereinfacht. Aus Sicherheitsgründen könnten diese Stellen bei Bedarf jedoch natürlich nach wie vor freigehalten werden.

## Patentansprüche

1. Spirale einer Strömungsmaschine, die aus einer Anzahl von entlang einer Spiralenlängsachse angeordneten und an den Stirnseiten miteinander verbundenen Segmenten (2) und zumindest einer Parallelplatte (3) besteht, wobei im Bereich des Überganges der Spirale (1) zu der Parallelplatte (3) ein Verstärkungsblech (4) angeordnet ist, welches einen Teil des Mantels der Spirale (1) bildet, **dadurch gekennzeichnet, dass** das Verstärkungsblech (4) die Spirale (1) mit der Parallelplatte (3) in Richtung der Spiralenlängsachse nur abschnittsweise verbindet.

2. Spirale nach Anspruch 1, **dadurch gekennzeichnet, dass** das Verstärkungsblech (4) dreiecksförmig ausgeführt ist.

3. Spirale nach Anspruch 1 oder 2, **dadurch gekennzeichnet, dass** durch das Verstärkungsblech (4) die innere Kontur der Spirale (1) im Wesentlichen erhalten bleibt.

4. Spirale nach einem der Ansprüche 1 bis 3, **dadurch gekennzeichnet, dass** die Verstärkungsbleche (4) im Bereich der Spirale (1) mit den größten Durchmessern angeordnet sind.

5. Spirale nach einem der Ansprüche 1 bis 4, **dadurch gekennzeichnet, dass** zumindest je ein Verstärkungsblech (4) an beiden Seiten der Übergänge zu der Parallelplatte (3) angeordnet ist.

6. Spirale nach einem der Ansprüche 1 bis 5, **dadurch gekennzeichnet, dass die** Segmente (2) miteinander verschweißt sind.

7. Spirale nach einem der Ansprüche 1 bis 6, **dadurch gekennzeichnet, dass** die Spirale (1) Ausnehmungen aufweist in die Verstärkungsbleche (4) in die Spirale (1) eingeschweißt sind.

8. Spirale nach einem der Ansprüche 1 bis 7, **dadurch gekennzeichnet, dass** Verstärkungsbleche (4) außen auf den Mantel der Spirale (1) aufgeschweißt sind.

9. Wasserkraftwerk bestehend aus zumindest einer Turbine oder Pumpturbine mit einer Spiralzuführung des flüssigen Mediums und einem geeigneten Generator, wobei die Spirale (1) der Turbine oder Pumpturbine nach einem der Ansprüche 1 bis 7 gefertigt ist.

10. Wasserkraftwerk nach Anspruch 9, **dadurch gekennzeichnet, dass** die Außenfläche der Spirale (1) zumindest im Bereich der Verstärkungsbleche (4) vollständig einbetoniert ist.

## Claims

1. Spiral for a turbo-machine comprising a number of segments (2) disposed along a spiral longitudinal axis and joined to one another at the end faces, and at least one parallel plate (3), and a reinforcing plate (4) is provided in the region of the transition from the spiral (1) to the parallel plate (3) and constitutes a part of the casing of the spiral (1), **characterised in that** the reinforcing plate (4) connects only some portions of the spiral (1) to the parallel plate (3) in the direction of the spiral longitudinal axis.

2. Spiral as claimed in claim 1, **characterised in that** the reinforcing plate (4) is triangular in shape.

3. Spiral as claimed in claim 1 or 2, **characterised in that** the inner contour of the spiral (1) is essentially preserved by the reinforcing plate (4).

4. Spiral as claimed in one of claims 1 to 3, **characterised in that** the reinforcing plates (4) are disposed in the region of the spiral (1) with the biggest diameters.

5. Spiral as claimed in one of claims 1 to 4, **characterised in that** at least one reinforcing plate (4) is disposed respectively on both sides of the transitions to the parallel plate (3).

6. Spiral as claimed in one of claims 1 to 5, **characterised in that** the segments (2) are welded to one another.

7. Spiral as claimed in one of claims 1 to 6, **characterised in that** the spiral (1) has recesses in which the reinforcing plates (4) are welded into the spiral (1).

8. Spiral as claimed in one of claims 1 to 7, **characterised in that** reinforcing plates (4) are welded externally onto the casing of the spiral (1).

9. Hydroelectric power plant comprising at least one turbine or pump turbine with a spiral inlet for the liquid medium and an appropriate generator, and the spiral (1) of the turbine or pump turbine is made as claimed in one of claims 1 to 7.

10. Hydroelectric power plant as claimed in claim 9, **characterised in that** the external surface of the spiral (1) is completely set in concrete at least in the region of the reinforcing plates (4).

## Revendications

1. Spirale d'une turbomachine, composée d'une pluralité de segments (2), disposés le long d'un axe longitudinal de spirale et reliés ensemble au niveau des faces frontales, et d'au moins une plaque parallèle (3), où, dans la zone de la transition de la spirale (1) en la plaque parallèle (3), est disposée une tôle de renforcement (4) formant une partie de l'enveloppe de la spirale (1), **caractérisée en ce que** la tôle de renforcement (4) relie la spirale (1) à la plaque parallèle (3), dans la direction de l'axe longitudinal de la spirale, uniquement par tronçons.

2. Spirale selon la revendication 1, **caractérisée en ce que** la tôle de renforcement (4) est en forme de triangle.

3. Spirale selon la revendication 1 ou 2, **caractérisée en ce qu'**au moyen de la tôle de renforcement (4), le contour intérieur de la spirale (1) est sensiblement conservé.

4. Spirale selon l'une des revendications 1 à 3, **caractérisée en ce** les tôles de renforcement (4) sont disposées dans la zone de la spirale (1) présentant les diamètres maximaux.

5. Spirale selon l'une des revendications 1 à 4, **caractérisée en ce qu'**au moins une tôle de renforcement (4) est disposée respectivement sur les deux côtés des transitions vers la plaque parallèle (3).

6. Spirale selon l'une des revendications 1 à 5, **caractérisée en ce que** les segments (2) sont soudés ensemble.

7. Spirale selon l'une des revendications 1 à 6, **caractérisée en ce que** la spirale (1) présente des évidements, dans lesquels des tôles de renforcement (4) sont soudées dans la spirale (1).

8. Spirale selon l'une des revendications 1 à 7, **caractérisée en ce que** des tôles de renforcement (4) sont rapportées par soudage extérieurement sur l'enveloppe de la spirale (1).

9. Centrale hydraulique composée d'au moins une turbine ou d'une turbine pompe, avec une alimentation en spirale du milieu liquide et un générateur approprié, la spirale (1) de la turbine, ou de la turbine pompe, étant fabriquée selon l'une des revendications 1 à 7.

10. Centrale hydraulique selon la revendication 9, **caractérisée en ce que** la face extérieure de la spirale (1) est complètement bétonnée, au moins dans la zone des tôles de renforcement (4).
